# EUROPÄISCHE PATENTANMELDUNG

(11) **EP 1 936 912 A2**
(43) Veröffentlichungstag der Anmeldung: **25.06.2008**
(21) Anmeldenummer: 07024282.1
(22) Anmeldetag: 14.12.2007
(51) Int. Cl.: H04L 29/06, H04M 3/51

(54) **Notruflokalisierung für IP-basierte Telefonie**

(30) Priorität: 20.12.2006 DE 102006061521
(71) Anmelder: Deutsche Telekom AG, 53113 Bonn (DE); International Business Machines Corporation, Armonk, NY 10504 (US)
(72) Erfinder: Korporal, Markus, 47053 Duisburg (DE); Schott, Roland, 61231 Bad Nauheim (DE); Barton, Rudolf, 63785 Oldenburg (DE); Hausdorf, Reinhard, 64372 Ober-Ramstadt (DE); Lentz, Thomas, 60486 Frankfurt/Main (DE); Orians, Gerd, 64407 Fränkisch-Crumbach (DE); Tenambergen, Franz, 49497 Mettingen (DE)

(57) **Zusammenfassung**

Die Erfindung betrifft eine Lösung zur Lokalisierung des Ausgangspunkts eines IP-basierten Telefon-Notrufs.
Gemäß dieser Lösung laufen derartige Notrufe an einem TAS-Proxy auf und werden von diesem, zusammen mit Lokalisierungsinformationen, an die lokal zuständige Notrufabfragestelle übertragen. Die Informationen zur Notrufabfragestelle und die an diese zu übertragenden Lokalisierungsinformationen werden dem TAS-Proxy auf eine Datenbankabfrage bei einer hochverfügbaren Replikationsdatenbank zur Verfügung gestellt, welche unter Verwendung der bekannten aktuellen IP-Adresse des Notrufenden erfolgt. Die Notrufdaten werden dem TAS-Proxy in Form von Teilnehmerdaten zur Verfügung gestellt, welche zumindest eine Rufnummer der Notrufabfragestelle, die User provided Rufnummer des Anrufenden und eine modifizierte Network provided Rufnummer (Emergency-ID) enthalten. Dabei besteht die Emergency-ID aus einem Datenbankverweis auf den Standort des Anrufers eindeutig beschreibende technische Daten und einem sie als einen derartigen Verweis kennzeichnenden Präfix. Die aktuell mit der IP-Adresse des Teilnehmers korrespondierenden technischen Daten zu seinem Standort und die für ihn zuständige Notrufabfragestelle werden aus zur Replikationsdatenbank übermittelten Wegeinformationen der Internetzugangssysteme gewonnen.

## Beschreibung

Die Erfindung betrifft ein Verfahren und ein Notrufsystem, mittels welchen es möglich ist, für einen unter Nutzung der IP-Telefonie abgesetzten Notruf den Ausgangspunkt des Anrufs zu lokalisieren.

In vielen Staaten, darunter auch in Deutschland, existieren gesetzliche Bestimmungen, nach denen es technisch gewährleistet sein muss, für einen bei einer offiziellen beziehungsweise amtlichen Notrufnummer eingehenden Anruf den Ausgangspunkt des Anrufs zu lokalisieren. In Deutschland müssen nach dem Telekommunikationsgesetz mit einem Notruf an die zuständige Notrufabfragestelle (Notrufabfragestelle der lokalen Polizei- oder Feuerwehrdienststelle) entweder die aktuelle Rufnummer des Anrufenden nach dem ITU-T E.164-Standard oder sonstige Daten übermittelt werden, die eine eindeutige Ermittlung des aktuellen Standortes des Anmelders ermöglichen. Bei der nach dem ITU-T E.164 definierten Rufnummer handelt es sich um die Rufnummer des Festnetzanschlusses, von welchem die jeweilige Verbindung aufgebaut wird. Dabei ist über Einträge in entsprechenden Kundenbeziehungsweise Teilnehmerdatenbanken aufgrund der festen Zuordnung eines Festnetzanschlusses zu einem Standort für aus dem Festnetz abgesetzte Anrufe, insbesondere Notrufe, eine Lokalisierung des Anrufenden in jedem Falle gewährleistet. Hierzu wird für jede über das Festnetz aufgebaute Telefonverbindung neben der so genannten User provided Rufnummer eine weitere, die so genannte Network provided Rufnummer übertragen. Letztere ist durch die Notrufabfragestelle für die Anruferlokalisierung auswertbar. Während es sich bei der User provided Rufnummer um eine CLIP-Rufnummer (Calling Line Identification Presentation) handelt, welcher das Leistungsmerkmal "no screening option" zugeordnet ist, so dass sie netzseitig nicht überprüfbar ist beziehungsweise nicht überprüft wird, handelt es sich bei der Network provided Rufnummer um eine von dem Anrufer nicht beeinflussbare Angabe, welcher eindeutig eine Standortinformation zugeordnet ist.

Auch in den Mobilfunknetzen ist aufgrund ihres zellularen Aufbaus über die in den Basisstationen des Netzes geführten Register der aktuelle Aufenthaltsort eines mit Hilfe eines Mobiltelefons eine Telefonverbindung aufbauenden Anrufers zumindest in Form von Angaben über die Funkzelle, in welcher er beziehungsweise das zum Anruf benutzte Mobiltelefon sich befindet, möglich. Gegenwärtig ist jedoch eine Zunahme der IP-Telefonie zu verzeichnen, für welche die vorgenannten Prinzipien nicht gelten. Dabei ist davon auszugehen, dass die IP-Telefonie mittel- beziehungsweise langfristig eine größere Bedeutung als die bisherige herkömmliche Festnetztelefonie im öffentlichen Telefonnetz beziehungsweise PSTN (Public switched Telephone Network) erlangen oder diese sogar ablösen wird. Bisher sind DSL-Anschlüsse, welche überwiegend für die IP-Telefonie genutzt werden, meistens noch an analoge oder ISDN-Festnetzanschlüsse gekoppelt. Insoweit ist eine Lokalisierung von Anrufern, welche sich der IP-Telefonie bedienen, in der Regel noch über die Standortinformationen zum jeweiligen analogen oder ISDN-Festnetzanschluss gegeben. Dabei ist es zudem häufig so, dass IP-Telefonie-Anbieter über eine entsprechende Konfiguration der bei ihren Kunden eingesetzten Router Anrufe zu Notrufnummern vom IP-basierten Weg ausschließen und Anrufe zu diesen Rufnummern über den normalen analogen beziehungsweise ISDN-Anschluss aufgebaut werden.
Im Businessbereich werden aber heute bereits in größerem Umfang IP-Anschlüsse mit fester IP-Adresse ohne zugehörigen Festnetzanschluss, das heißt ohne zugehörige ITU-T E.164-Rufnummer angeboten. Mit dem zunehmenden Übergang zur IP-Telefonie wird somit für DSL-Breitbandanschlüsse eine zugehörige ITU-T E.164-Standortrufnummer immer häufiger entfallen. Außerdem nimmt die nomadische Nutzung der IP-Telefonie (auch VolP-Telefonie) zu, bei welcher diese über VolP-fähige mobile Endgeräte, zum Beispiel WLAN-fähige Handys, genutzt wird. Für die nomadische Nutzung der IP-Telefonie und ihre Nutzung über Breitbandanschlüsse ohne zugehörigen Festnetzanschluss greifen jedoch die eingangs dargestellten Mechanismen nicht mehr. Bislang sind in vielen Staaten für diese Art der Nutzung noch keine abschließenden gesetzlichen Regelungen im Hinblick auf das aus Sicherheitsgründen bestehende Erfordernis der Anruflokalisierung für Notrufe verabschiedet worden. Bei existierenden gesetzlichen Regelungen wird in einigen Ländern ausschließlich auf die Mithilfe des Anrufenden vertraut, welcher der Notrufabfragestelle selbst entsprechende Standortinformationen geben soll. Jedoch kann dies einer sich in einer lebensgefährlichen Situation oder in einer extremen Gesundheitskrise befindenden Person unter Umständen nicht mehr möglich sein. Andererseits sind aber auch technische Lösungen, welche das vorstehend geschilderte Problem vollständig lösen, bislang im Grunde nicht bekannt.

Aufgabe der Erfindung ist es, eine Lösung zu schaffen, welche die Lokalisierung von Anrufern für unter Nutzung der IP-Telefonie abgesetzte Anrufe, insbesondere Notrufe, auch bei nomadischer Nutzung ermöglicht. Hierzu sind ein Verfahren und ein für dessen Nutzung ausgebildetes Notrufsystem anzugeben.

Die Aufgabe wird durch ein Verfahren mit den Merkmalen des Hauptanspruchs gelöst. Ein die Aufgabe lösendes Notrufsystem wird durch den ersten Sachanspruch charakterisiert. Vorteilhafte Aus- beziehungsweise Weiterbildungen der Erfindung sind durch die jeweiligen Unteransprüche gegeben.
Nach dem vorgeschlagenen Verfahren zur Anruferlokalisierung laufen unter Nutzung von IP-basierter Telefonie getätigte Anrufe zunächst an einem Telephony Application Server (TAS) beziehungsweise TAS-Proxy auf. Ein hier als Voice-Over-IP eingehender Telefonnotruf wird von dem TAS-Proxy über ein Media-Gateway an die jeweils lokal zuständige, in das öffentliche Telefonnetz eingebundene Notrufabfragestelle zusammen mit einer die Lokalisierung des Anrufers ermöglichenden Information übertragen. Dabei werden die Notrufdaten, nämlich Informationen zu der für den Notruf lokal jeweils zuständigen Notrufabfragestelle und die von dem TAS-Proxy an diese Notrufabfragestelle zur Ermöglichung der Lokalisierung des Anrufers zu übertragenden Informationen, dem TAS-Proxy im Ergebnis einer an eine durch Replizierung hochverfügbar gemachte Datenbank gerichteten Datenbankabfrage zur Verfügung gestellt, wobei die Datenbankabfrage unter Verwendung der bekannten aktuellen IP-Adresse des den Notruf absetzenden Voice-Over-IP-Teilnehmers erfolgt. Die vorgenannten Notrufdaten werden dem TAS-Proxy erfindungsgemäß in Form von Teilnehmerdaten zur Verfügung gestellt, welche zumindest eine vorzugsweise nicht direkt anwählbare Rufnummer der zuständigen Notrufabfragestelle, die im Hinblick auf die Datenbankanfrage nur transparent durchgeleitete User provided Rufnummer des Anrufenden und eine modifizierte Network provided Rufnummer enthalten. Erfindungsgemäß besteht dabei die als Emergency-ID dienende modifizierte Network provided Rufnummer aus einem Datenbankverweis auf den Standort des Anrufers eindeutig beschreibende technische Daten und einem sie als einen derartigen Verweis kennzeichnenden Präfix. Die aktuell mit der IP-Adresse des den Notruf absetzenden Teilnehmers korrespondierenden Notrufdaten, also die technischen Daten zum Standort des Teilnehmers und die für ihn zuständige Notrufabfragestelle, werden dabei aus Wegeinformationen gewonnen, welche zuvor von den Internetzugangssystemen an die hochverfügbare Replikationsdatenbank übermittelt worden sind. Bei den vorgenannten den Standort des Anrufers beschreibenden technischen Daten handelt es sich um Angaben wie den NAS-Port, das heißt den Port am Zugangsserver, den zugehörigen Slot, den genutzten virtuellen Pfad (VPI - Virtual Path Identifier) und den genutzten virtuellen Kanal (VCI - Virtual Channel ldentifier), welche unmittelbar mit dem Standort von welchem aus der Notruf aufgebaut wurde verknüpft sind.
Wie zuvor ausgeführt, wird die User provided Rufnummer im Hinblick auf die Datenbankabfragevorgänge zur Ermittlung technischer, mit dem Standort des Voice-Over-IP-Anrufers korrespondierender Daten nur transparent durchgeleitet. Jedoch handelt es sich bei dieser User provided Rufnummer normaler Weise um eine netzseitig nicht geprüfte Rufnummer. Insoweit ermöglicht es das Verfahren entsprechend seiner grundsätzlichen Ausgestaltung zwar den Standort und dabei einen für den Notruf genutzten physikalischen Teilnehmeranschluss zu lokalisieren, nicht aber den Teilnehmer selbst beziehungsweise die von ihm an dem betreffenden Standort genutzte Teilnehmerkennung beziehungsweise Rufnummer eindeutig zu identifizieren. Gemäß einer bevorzugten Ausgestaltung des Verfahrens wird daher die ursprünglich ungeprüfte User provided Rufnummer in dem TAS-Proxy durch eine netzseitig geprüfte User provided Rufnummer substituiert. Der TAS-Proxy greift dazu auf eine eigene Datenbank mit einem zu dem jeweiligen Teilnehmer im Zuge der Einrichtung seiner Voice-Over-IP-Rufnummern beim Provider hinterlegten Kundenprofil zurück. Gleichwohl wird die in der vorbeschriebenen Weise substituierte User provided Rufnummer bei den nachfolgenden, der Ermittlung der Notrufdaten dienenden Verarbeitungsschritten und Abfragevorgängen transparent durchgeleitet.
Gemäß einer Umsetzung des Verfahrens gestaltet sich im Detail folgender Verfahrensablauf. Zunächst wird die Behandlung eines an eine Notrufnummer gerichteten IP-basierten Anrufs von dem TAS-Proxy zusammen mit der IP-Adresse des den Notruf absetzenden Voice-over-IP-Teilnehmers an eine spezielle Notrufapplikation übergeben. Diese Notrufapplikation ruft die mit der vorgenannten IP-Adresse korrespondierenden Notrufdaten aus der hochverfügbaren Replikationsdatenbank ab. Sie richtet hierzu einen speziellen, die IP-Adresse des den Notruf absetzenden Voice-over-IP-Teilnehmers enthaltenden Request an die Replikationsdatenbank. Als Antwort auf diesen Request gibt die Replikationsdatenbank die bei ihr in Zuordnung zu der vorgenannten IP-Adresse gespeicherten, mit dieser IP-Adresse aktuell korrespondierenden technischen Daten zum Standort in Form des gemäß der Erfindung vorgesehenen Verweises an die Notrufapplikation zurück. Die in dieser Form eine Notrufkennung beziehungsweise eine Emergency-ID ausbildenden Notrufdaten werden schließlich von der Notrufapplikation zur weiteren Behandlung des Anrufs an den TAS-Proxy übergeben, welcher die Verbindung zu der zuständigen Notrufabfragestelle aufbaut und die Emergency-ID an diese übergibt. Mit Hilfe der Emergency-ID kann die Notrufabfragestelle, sofern sich dies erforderlich macht, weil beispielsweise der den Notruf absetzende Anrufer nicht mehr ansprechbar ist, dessen Standort ermitteln. Hierzu richtet sie unter Angabe der Emergency-ID eine entsprechende Anfrage beispielsweise an einen Leitstellenservice, der über die Emergency-ID die technischen Daten zum Standort des Anrufenden aus der hochverfügbaren Replikationsdatenbank abruft und mittels dieser Daten über eine Betriebsdatenbank Zugriff auf die eigentlichen Adressinformationen erhält, welche der Leitstellenservice dann an die Notrufabfragestelle überträgt. Vorzugsweise handelt es sich bei dem Leitstellenservice um eine zentrale von den Leitstellen zumindest einer Region unmittelbar kontaktierbare Stelle. Das erfindungsgemäße Verfahren ist vorzugsweise so ausgebildet, dass der TAS-Proxy jeden bei ihm auflaufenden Voice-over-IP-Anruf mittels einer auf dem TAS-Proxy ablaufenden Software darauf überprüft, ob der betreffende Anruf an eine Notrufnummer gerichtet ist und dass der TAS-Proxy als Notrufe erkannte Anrufe zur weiteren Behandlung an die Notrufapplikation übergibt, während er alle anderen Anrufe unmittelbar entsprechend ihrem jeweiligen Ziel routet. Der TAS-Proxy vergleicht hierzu die bei ihm eingehenden Voice-over-IP-Anrufe mit Einträgen in einer zu diesem Zweck auf dem TAS-Proxy gehaltenen oder von ihm ansprechbaren Datenbank.
Ein zentrales Element der Erfindung ist die hochverfügbare Replikationsdatenbank. Es handelt sich hierbei um eine vorzugsweise mehrfach replizierte Datenbank, welche redundant auf mehreren verteilt angeordneten, eine hohe Ausfallsicherheit aufweisenden Systemen gehalten wird. Zur Datenbank gehört eine Software, welche aus den von den Zugangssystemen des Internets erhaltenen Wegeinformationen auf die zu einer IP-Adresse gehörenden technischen Daten zum Standort des Anrufers schließt und diese unter Bezug zur IP-Adresse speichert. Ferner wird durch diese Software auf der Grundlage von Regeln festgelegt, durch welches jeweils ein Replikat der Datenbank haltende System die Notrufdaten an eine diese abfordernde Notrufapplikation übergeben werden. Die Emergency-ID, welche diese Informationen codiert, wird ebenfalls durch die zur Replikationsdatenbank gehörende Software generiert.
Üblicherweise wird die für einen eingehenden Telefonnotruf lokal zuständige Notrufabfragestelle die erforderlichen Standortinformationen bei dem sich mit dem Notruf an sie wendenden Teilnehmer abfragen. Sie wird in der Regel nur im Falle dessen, dass es ihr aufgrund eventueller technischer Störungen der Verbindung nicht mehr möglich ist, diese Informationen beim Teilnehmer abzufragen, oder der sich mit dem Notruf an sie wendende Teilnehmer nicht mehr ansprechbar ist, auf andere, beispielsweise auch dem erfindungsgemäßen Verfahren zugrunde liegende Möglichkeiten zurückgreifen müssen. Nach dem erfindungsgemäßen Verfahren sind unterschiedliche Möglichkeiten denkbar, wie die Notrufabfragestelle unter Verwendung der ihr mit dem Notruf übermittelten Emergency-ID an die von ihr benötigten Standortinformationen gelangt. Dabei wird jedoch eine Möglichkeit präferiert, nach der die Notrufabfragestelle die Standortinformationen bei einem zentralen Leitstellenservice, wie er beispielsweise bereits heute im Festnetz der Telekom existiert, abfragt. Die Notrufabfragestelle kontaktiert dabei die Replikationsdatenbank nicht mittels entsprechender Systeme selbst, sondern wendet sich an den hierfür entsprechend ausgestatteten zentralen Leitstellenservice. Dieser erfragt dann seinerseits die den Standort technisch beschreibenden Daten, wie NAS-Port, Slot, VPI und VPC, unter Verwendung der ihm von der Notrufabfragestelle übermittelten modifizierten Network provided Rufnummer, greift mit den von der Replikationsdatenbank erhaltenen technischen Daten auf eine Betriebsdatenbank des Voice-Over-IP-Providers zu und gibt die aus dieser erhaltenen Standortinformationen beziehungsweise Adressdaten an die Notrufabfragestelle zurück.
Ein nach dem beschriebenen Verfahren arbeitendes und die Aufgabe lösendes Notrufsystem zur Behandlung von Notrufen unter Nutzung IP-basierter Telefonie besteht aus Teilnehmeranschlüssen mit einem Voice-over-IP-Zugang, mindestens einem Telephony Application Server beziehungsweise TAS-Proxy und mehreren in das öffentliche Telefonnetz eingebundenen Notrufabfragestellen. IP-basierte Anrufe werden dabei von dem TAS-Proxy jeweils über einen Media-Gateway zu Teilnehmeranschlüssen im öffentlichen Telefonnetz geroutet, wobei ein IP-basierter Telefonnotruf jeweils der für diesen Notruf lokal zuständigen Notrufabfragestelle zugeleitet wird. Erfindungsgemäß ist für einen Telefonnotruf zwischen den TAS-Proxy und die für diesen Notruf lokal zuständige Notrufabfragestelle mit dem deren Erreichbarkeit über IP-basierte Anrufe ermöglichenden Media-Gateway eine Instanz geschaltet, an welche der TAS-Proxy den Notruf unter Angabe der IP-Adresse des den Notruf absetzenden Voice-over-IP-Teilnehmers übergibt und von welcher er mit der betreffenden IP-Adresse korrespondierende Notfalldaten zurückgegeben bekommt. Bei den Notfalldaten handelt es sich, wie bereits zum Verfahren ausgeführt, um die Rufnummer der für den Notruf lokal zuständigen Notrufabfragestelle, die von der erfindungsgemäßen zusätzlichen Instanz lediglich transparent durchgeleitete User provided Rufnummer des den Notruf absetzenden Voice-over-IP-Teilnehmers und die modifizierte Network provided Rufnummer beziehungsweise Emergency-ID. Letztere besteht, wie ebenfalls bereits ausgeführt, aus einem Verweis auf die technischen Daten zum Standort sowie einem die modifizierte Network provided Rufnummer als einen solchen Verweis kennzeichnenden Präfix. Die erfindungsgemäße zusätzliche Instanz besteht aus einer Notrufapplikation sowie einer von dieser Notrufapplikation zur Abfrage der von ihr an den TAS-Proxy zurückzugebenden Notfalldaten ansprechbaren, hochverfügbaren Replikationsdatenbank. Die hochverfügbare Datenbank, deren Replikationen vorzugsweise dezentral auf verteilten Systemen gehalten werden, ist dabei hard- und softwaremäßig zur Gewinnung der Notfalldaten und der mit diesen verknüpften technischen Daten zum Standort des Anrufers aus Zugangseinrichtungen des Internet ausgebildet. Bei den vorgenannten Zugangseinrichtungen handelt es sich um ADSL- und ATM-NI-Server, um Inventory-Server zur Erfassung und Inventarisierung von Hard- und Softwareinformationen von Zugängen für und über Gbit-Ethernet-Netzwerke und um Order-Management-System-Server.

Ein Ausführungsbeispiel der Erfindung soll nachfolgend unter Bezug auf entsprechende Zeichnungen gegeben werden. In den zugehörigen Zeichnungen zeigen:
- Fig. 1: Die wesentlichen Teile eines nach dem Verfahren arbeitenden Notrufsystems in einer schematischen Darstellung;
- Fig. 2: Einen Ausschnitt des Systems gemäß Fig. 1 in einer mehr detaillierten Darstellung.

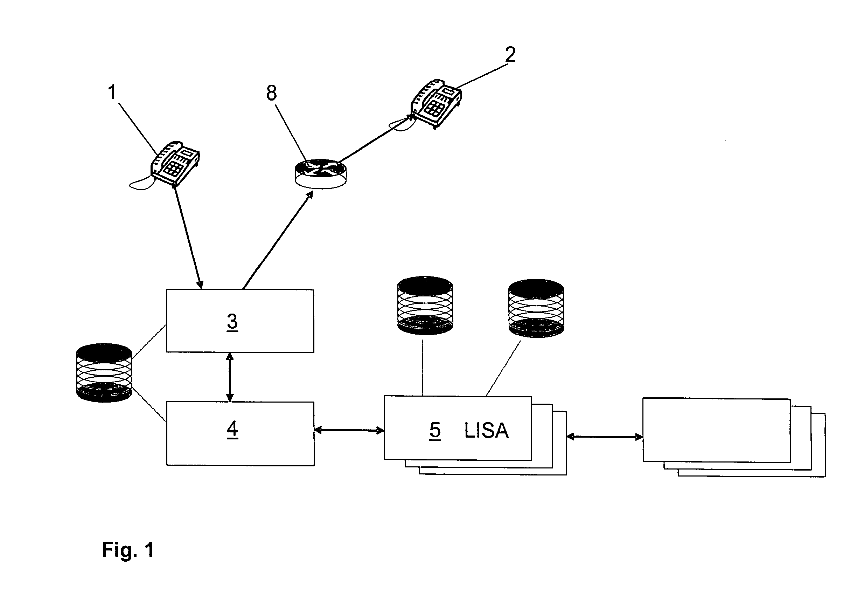

Die Fig. 1 zeigt die wesentlichen Teile eines erfindungsgemäßen beziehungsweise nach dem vorgeschlagenen Verfahren arbeitenden Notrufsystems in einer vereinfachten schematischen Darstellung. In der Zeichnung symbolisiert ein Endgerät beziehungsweise ein Telefon einen von mehreren Teilnehmeranschlüssen von Teilnehmern 1 mit einem Voice-over-IP-Zugang. Ebenfalls durch ein Endgerät symbolisiert ist die beispielsweise für den vorgenannten symbolisch dargestellten Teilnehmeranschluss aktuell lokal zuständige Notrufabfragestelle 2. Das beziehungsweise die Endgeräte dieser Notrufabfragestelle 2 sind in das in der Zeichnung nicht durch ein Symbol dargestellte PSTN (Public Switched Telephone Network) eingebunden und über ein als Brücke zwischen dem IP-Netz, respektive dem Internet, und dem PSTN fungierendes Media-Gateway 8 für IP-basierte Anrufe erreichbar. Die Anrufe von die IP-basierte Telefonie nutzenden Voice-over-IP-Teilnehmern 1 gehen an einem grundsätzlich auch aus dem Stand der Technik bekannten Telephony Application Server 3 ein. Dieser für die IP-Telefonie ausgebildete TAS-Proxy 3 routet die bei ihm auflaufenden Voice-over-IP-Anrufe über jeweilige Gateways 8 zu den im PSTN angerufenen Teilnehmern. Dabei werden IP-basierte Telefonnotrufe von dem TAS-Proxy 3 zu der für sie jeweils lokal zuständigen Notrufabfragestelle 2 geroutet. Dazu ist bei dem erfindungsgemäßen Notrufsystem zwischen dem TAS-Proxy 3 und der Notrufabfragestelle für am TAS-Proxy 3 auflaufende Notrufe eine zusätzliche Instanz 4, 5 geschaltet. Hierbei handelt es sich um eine Notrufapplikation 4 und um eine hochverfügbare Replikationsdatenbank 5 mit unter Zuordnung zu den IP-Adressen abgespeicherten technischen Daten zu Standorten der Voice-over-IP-Teilnehmer 1. Es vollzieht sich folgender Ablauf:
Der Voice-over-IP-Teilnehmer 1 sendet über einen SIP-Client eine Invite-Nachricht für eine Notrufnummer, welcher an dem als Proxy arbeitenden TAS 3 aufläuft. Der TAS-Proxy 3 ermittelt aus einer Datenbank 9, ob es sich bei der angerufenen Rufnummer um eine Notrufnummer handelt. Sofern die angerufene Nummer ungültig ist, weist er den Anruf ab. Handelt es sich hingegen um eine gültige Rufnummer, aber nicht um eine Notrufnummer, routet der TAS-Proxy 3 diesen zum angerufenen Teilnehmeranschluss. Identifiziert er hingegen die angerufene Nummer als Notrufnummer, gibt er die weitere Behandlung des Anrufs zunächst an die Notrufapplikation 4 ab. Diese richtet, unter Angabe der vom TAS-Proxy 3 erhaltenen IP-Nummer des den Notruf absetzenden Voice-over-IP-Teilnehmers 1 einen speziellen Request (SOAP - Simple Object Protocol Access-Request) an die Replikationsdatenbank 5. Die Replikationsdatenbank 5, hier als LISA (Location Information Service Authority) bezeichnet, ermittelt anhand der IP-Adresse die Notrufdaten und gibt die Rufnummer der lokal zuständigen Notrufabfragestelle 2 und neben, der User provided Rufnummer des Voice-over-IP-Teilnehmers 1, für welche die Instanz 4, 5 des Notrufsystems und somit auch die Replikationsdatenbank 5 transparent ist, eine Emergency-ID in Form einer modifizierten Network provided Rufnummer an die Notrufapplikation 4 zurück. Die Emergency-ID beziehungsweise die modifizierte Network provided Rufnummer enthält einen Datenbankverweis auf einen Eintrag mit technischen Daten zum Standort des den Notruf absetzenden Voice-over-IP-Teilnehmers 1 und einen diesem Verweis vorangestellten Präfix, welcher die Network provided ID als eine zum Zweck der Anruferlokalisierung bei Notrufen modifizierte Network provided Rufnummer kennzeichnet. Bei der Emergency-ID handelt es sich um eine Rufnummer, welche den Konventionen der Rufnummern im PSTN entspricht. Der sie kennzeichnende Präfix hat daher die Form einer Vorwahlnummer, bei der es sich dann aber um eine ausschließlich für diesen speziellen Zweck reservierte Vorwahlnummer handelt. Die Notrufapplikation 4 gibt die von der hochverfügbaren Replikationsdatenbank 5 erhaltenen neuen Teilnehmerdaten zum angerufenen Teilnehmer und zum anrufenden Teilnehmer (letztere mit der darin enthaltenen modifizierten Network provided Rufnummer) an den TAS-Proxy 3 zurück. Dieser schickt schließlich einen Invite an den substituierten B-Teilnehmer, also den Empfänger, nämlich die lokal zuständige Notrufabfragestelle 2, unter. Übermittlung der Emergency-ID. Über das Media-Gateway 8 wird dieser Notruf zum Teilnehmeranschluss der Notrufabfragestelle 2 im PSTN geführt.

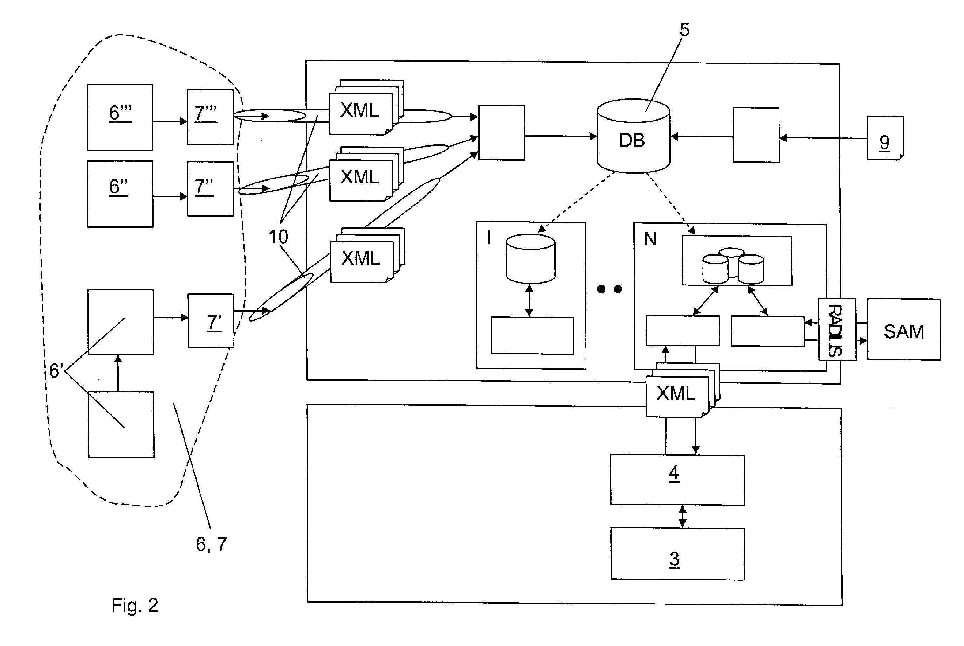

Die Fig. 2 zeigt einen Ausschnitt des Notrufsystems gemäß der Fig. 1 ebenfalls in einer schematischen, jedoch etwas mehr detaillierten Darstellung. Zu erkennen ist eine TAS-Plattform mit dem TAS-Proxy 3 und der ihm zugeordneten Notrufapplikation 4 als Teil der zusätzlichen Instanz 4, 5. Die Notrufapplikation 4 hat Zugriff auf die an mehreren Standorten (I bis N) replikativ gehaltene, hochverfügbare Datenbank 5 mit den technischen Standortdaten. Die Datenbank 5 wird über entsprechende Chanel beziehungsweise Kanäle 10 durch die Internetzugangseinrichtungen 6, 7, nämlich ADSL- und ATM-NI-Server 6', Server zur Gbit-Ethernet-Anbindung 6" und IP-Server 6''' von Order-Management-Systemen sowie zugehörige Massage-Queque-Server (MQ) 7', 7", 7''', mit den Wegeinformationen gespeist und rechnet aus diesen auf die von den Notrufabfragestellen 2 benötigten den Zugriff auf die eigentliche Standort- beziehungsweise die Adressinformation ermöglichenden technischen Standortdaten zurück. Der Datenaustausch zwischen den vorgenannten Einheiten und Systemen geschieht vorzugsweise im XML-Format.

### Liste der verwendeten Bezugszeichen

- 1: (Voice-Over-IP-) Teilnehmer
- 2: Notrufabfragestelle
- 3: Telephony Application Server beziehungsweise TAS-Proxy
- 4: Notrufapplikation
- 5: Replikationsdatenbank
- 6, 7: Zugangseinrichtungen
- 8: Gateway
- 9: Datenbank
- 10: Channel beziehungsweise Kanäle

## Patentansprüche

1. Verfahren zur Anruferlokalisierung bei unter Nutzung IP-basierter Telefonie als Voice-Over-IP zunächst an einem Telephony Application Server beziehungsweise TAS-Proxy (3) auflaufenden Telefon-Notrufen, nach welchem ein über das Internet abgesetzter Telefon-Notruf von dem TAS-Proxy (3) über ein Media-Gateway (8) an die jeweils lokal zuständige, in das öffentliche Telefonnetz eingebundene Notrufabfragestelle (2) zusammen mit einer die Lokalisierung des Anrufers (1) ermöglichenden Information übertragen wird, **dadurch gekennzeichnet, dass** die Notrufdaten, nämlich Daten zu der für den Notruf lokal jeweils zuständigen Notrufabfragestelle (2) und die vom TAS-Proxy (3) an diese Notrufabfragestelle (2) zur Ermöglichung der Lokalisierung des Anrufers (1) zu übertragenden Informationen, dem TAS-Proxy (3) im Ergebnis einer an eine durch Replizierung hochverfügbar gemachte Datenbank (5) unter Verwendung der IP-Adresse des den Notruf absetzenden Voice-Over-IP-Teilnehmers (1) gerichteten Datenbankabfrage in Form von Teilnehmerdaten zur Verfügung gestellt werden, welche zumindest eine Rufnummer der zuständigen Notrufabfragestelle (2), die User provided Rufnummer des Anrufenden (1) und eine modifizierte Network provided Rufnummer enthalten, wobei die modifizierte Network provided Rufnummer aus einem Verweis auf den Standort des Anrufers (1) eindeutig beschreibende technische Daten sowie einem sie als einen derartigen Verweis kennzeichnenden Präfix besteht und vom TAS-Proxy (3) nach dem Aufbau der Verbindung zur lokal zuständigen Notrufabfragestelle (2) an diese übertragen wird und wobei die jeweils aktuell mit der IP-Adresse des den Notruf absetzenden Teilnehmers (1) korrespondierenden technischen Daten zu seinem Standort sowie die für den von dieser IP-Adresse ausgehenden Notruf zuständige Notrufabfragestelle (2) aus Wegeinformationen gewonnen werden, welche zuvor von den Internet-Zugangseinrichtungen (6, 7) an die hochverfügbare Replikationsdatenbank (5) übermittelt worden sind.

2. Verfahren nach Anspruch 1, **dadurch gekennzeichnet, dass** die zunächst ungeprüfte User provided Rufnummer des Anrufenden (1) vom TAS-Proxy (3) auf der Grundlage eines Datenbankeintrags durch eine netzseitig geprüfte User provided Rufnummer substituiert wird.

3. Verfahren nach Anspruch 1 oder 2, **dadurch gekennzeichnet, dass** die modifizierte Network provided Rufnummer den Konvention für Telefonnummern im öffentlichen Telefonnetz beziehungsweise PSTN entspricht.

4. Verfahren nach Anspruch 1 bis 3, **dadurch gekennzeichnet, dass** die Behandlung eines an eine Notrufnummer gerichteten IP-basierten Anrufs von dem TAS-Proxy (3) zusammen mit der IP-Adresse des den Notruf absetzenden Voice-Over-IP-Teilnehmers (1) an eine Notrufapplikation (4) übergeben wird, welche aus der hochverfügbaren Replikationsdatenbank (5) die mit der vorgenannten IP-Adresse korrespondierenden Notrufdaten abruft und diese Notrufdaten in Form der Teilnehmerdaten zu dem rufenden Teilnehmer (1) sowie zu der für diesen zuständigen Notrufabfragestelle (2) an den TAS-Proxy (3) zurückgibt, der den Notruf über das Media-Gateway (8) zur zuständigen Notrufabrufstelle (2) routet.

5. Verfahren nach Anspruch 4, **dadurch gekennzeichnet, dass** jeder IP-basierte Anruf von dem TAS-Proxy (3) mittels einer auf diesem ablaufenden Software durch Vergleich mit Einträgen in einer dafür auf dem TAS-Proxy (3) gehaltenen oder von ihm ansprechbaren Datenbank (9) darauf überprüft wird, ob es sich um einen Notruf handelt, wobei als Notruf identifizierte Anrufe zur weiteren Behandlung an die Notrufapplikation (4) übergeben und alle anderen Anrufe von dem TAS-Proxy (3) unmittelbar zum angerufenen Empfänger geroutet werden.

6. Verfahren nach einem der Ansprüche 1 bis 5, **dadurch gekennzeichnet, dass** die an den TAS-Proxy (3) für den Notruf übermittelten Teilnehmerdaten, einschließlich der modifizierten Network provided Rufnummer des den Notruf absetzenden Voice-Over-IP-Teilnehmers (1) durch eine zur Replikationsdatenbank (5) gehörende Software aus den Wegeinformationen abgeleitet wird.

7. Verfahren nach einem der Ansprüche 1 bis 6, **dadurch gekennzeichnet, dass** die Standortinformationen zu dem den Notruf absetzenden Voice-Over-IP-Teilnehmer (1), sofern erforderlich, durch die Notrufabfragestelle (2) unter Angabe der bei ihr eingegangenen modifizierten Network provided Rufnummer bei einem zentralen Leitstellenservice erfragt werden, welche die mit der Network provided Rufnummer korrespondierenden technischen Daten zum Standort des Teilnehmers bei der hochverfügbaren Replikationsdatenbank (5) abruft, mit diesen technischen Daten die Stanortinformationen mit Adressangaben zum Teilnehmer (1) durch den Zugriff auf eine Betriebsdatenbank des Voice-Over-IP-Providers des Teilnehmers (1) ermittelt und die Standortinformationen der Notrufabfragestelle (2) übermittelt.

8. Notrufsystem zur Behandlung von Notrufen unter Nutzung IP-basierter Telefonie bestehend aus Teilnehmeranschlüssen von Teilnehmern (1) mit einem Voice-Over-IP-Zugang, mindestens einem Telephony Application Server beziehungsweise TAS-Proxy (3) und mehreren in das öffentliche Telefonnetz eingebundenen Notrufabfragestellen (2), wobei IP-basierte Anrufe vom TAS-Proxy (3) jeweils über ein Media-Gateway (8) zu Teilnehmeranschlüssen im öffentlichen Telefonnetz geroutet werden und ein IP-basierter Telefonnotruf jeweils der für diesen Notruf lokal zuständigen Notrufabfragestelle (2) zugeleitet wird, **dadurch gekennzeichnet, dass** für einen Telefonnotruf zwischen den TAS-Proxy (3) und die für diesen Notruf lokal zuständigen Notrufabfragestelle (2) mit dem deren Erreichbarkeit über IP-basierte Anrufe ermöglichenden Media-Gateway (8) eine Instanz (4, 5) geschaltet ist, an welche der TAS-Proxy (3) den Notruf unter Angabe der IP-Adresse des den Notruf absetzenden Voice-Over-IP-Teilnehmers (1) übergibt und von welcher dem TAS-Proxy mit der betreffenden IP-Adresse korrespondierende Notfalldaten mit der Rufnummer der für den Notruf zuständigen Notrufabfragestelle, der User provided Rufnummer des den Notruf absetzenden Voice-Over-IP-Teilnehmers und einer modifizierten Network provided Rufnummer zurückgegeben werden, wobei die vom TAS-Proxy (3) mit dem Notruf an die für diesen zuständige Notrufabfragestelle (2) weiterzuleitende modifizierte Network provided Rufnummer aus einem Verweis auf den Standort des Anrufers (1) eindeutig beschreibende technische Daten sowie einem sie als einen derartigen Verweis kennzeichnenden Präfix besteht und wobei die vorgenannte Instanz (4, 5) für die User provided Rufnummer transparent ist und aus einer Notrufapplikation (4) und einer von der Notrufapplikation (4) zur Abfrage der von ihr an den TAS-Proxy zurückzugebenden Notfalldaten ansprechbaren, hochverfügbaren Replikationsdatenbank (5) besteht, welche die Notfalldaten und die mit ihnen korrespondierenden technischen Daten zum Standort des den Notruf absetzenden Voice-Over-IP-Teilnehmers (1) aus an sie von den Internet-Zugangseinrichtungen (6, 7) übertragenen Wegeinformation gewinnt.

9. Notrufsystem nach Anspruch 8, **dadurch gekennzeichnet, dass** die Replikationsdatenbank (5) auf Systemen an verteilten Standorte (I bis N) gehalten wird.

10. Notrufsystem nach Anspruch 8 oder 9, **dadurch gekennzeichnet, dass** es sich bei den der Replikationsdatenbank (5) die Wegeinformationen zur Verfügung stellenden Internet-Zugangseinrichtungen um ADSL und ATM NI-Server(6'), Server (6") zur Gbit-Ethernet-Anbindung und Order Management System-Server (6''') sowie zugehörige Massage-Queque-Server (7', 7", 7''') handelt.
